# DEMANDE DE BREVET EUROPEEN

(11) **EP 2 505 865 A1**
(43) Date de publication de la demande: **03.10.2012**
(21) Numéro de dépôt: 12161882.1
(22) Date de dépôt: 28.03.2012
(51) Int. Cl.: F16D 23/14

(54) **Montage d'une butée d'embrayage sur un arbre d'une boîte de vitesses d'un véhicule automobile**

(30) Priorité: 28.03.2011 FR 1152551
(71) Demandeur: NTN-SNR Roulements, 74000 Annecy (FR)
(72) Inventeur: Beauprez, Jean-Michel, 72270 Menthonnex sous Clermont (FR)
(74) Mandataire: Sayettat, Julien Christian

(57) **Abrégé**

L'invention concerne un montage d'une butée d'embrayage sur un arbre d'une boîte de vitesses d'un véhicule automobile, comprenant un support annulaire (5) d'association de la butée sur un arbre qui comprend une portée d'appui (6) sur laquelle une portée de montage (7) solidaire de la bague fixe (2) est disposée, une rondelle élastique (9) d'autocentrage de la butée sur l'arbre étant disposée pour exercer un effort axial sur la portée de montage (7) contre la portée d'appui (6), ladite rondelle présentant une extrémité arrière (9a) en appui sur la portée de montage (7) et une extrémité avant (9b) disposée en appui sur un bourrelet (15) formé sur une portée axiale (10) du support (5), le support (5) présentant en outre une portée avant (11) qui est reliée à la portée axiale (10) en s'étendant intérieurement, l'extrémité avant (9b) de la rondelle (9) étant agencée pour pouvoir se déformer élastiquement dans une configuration de montage dans laquelle son diamètre intérieur est au moins égal au diamètre extérieur du bourrelet (15).

## Description

L'invention concerne un montage d'une butée d'embrayage sur un arbre d'une boîte de vitesses d'un véhicule automobile, ladite butée comprenant une bague tournante et une bague fixe pourvues chacune d'une piste de roulement formant entre elles un chemin de roulement dans lequel des corps roulants sont disposés pour guider la rotation relative desdites bagues.

On connaît des montages dans lesquels la bague tournante comprend une portée d'actionnement du diaphragme de l'embrayage par appui sensiblement axial de ladite portée sur ledit diaphragme, la bague fixe comprenant une portée de montage sur l'arbre qui est disposée en appui axial contre une portée d'un support d'association de la butée sur l'arbre.

Ainsi, la translation réversible de l'arbre permet l'actionnement du diaphragme par l'intermédiaire de la butée, entre une position d'embrayage dans laquelle la portée d'actionnement est disposée contre le diaphragme et une position de débrayage dans laquelle ladite portée appuie sur ledit diaphragme.

Toutefois, dans les applications embrayage, le diaphragme monté sur l'ensemble côté moteur et l'arbre primaire de la boîte de vitesses ne sont pas parfaitement concentriques.

Pour assurer la fonction d'autocentrage du diaphragme sur l'arbre, il est connu d'utiliser une rondelle élastique qui est disposée pour exercer un effort axial sur la portée de montage contre la portée d'appui de sorte à générer un effort d'autocentrage de la butée sur le support. En particulier, la rondelle d'autocentrage présente une extrémité arrière en appui sur la portée de montage et une extrémité avant disposée en appui sur un bourrelet formé sur une portée axiale du support.

Dans cette réalisation, la rondelle est d'abord montée autour de la portée axiale puis le bourrelet est formé, notamment par sertissage de la rondelle sur la portée axiale, afin d'assurer la retenue axiale de la rondelle et donc l'effort d'autocentrage attendu.

Dans certaines applications, par exemple pour les doubles embrayages, le support peut présenter une portée avant qui est reliée à la portée axiale en s'étendant intérieurement, notamment pour améliorer la compacité du montage en permettant la disposition de l'arbre de la boîte de vitesses à l'intérieur de la butée.

Toutefois, dans cette réalisation, le bourrelet de retenue axiale de la rondelle est formé préalablement au montage de la rondelle sur le manchon car la présence de la portée avant rend impossible le sertissage de la rondelle postérieurement audit montage.

L'invention a pour but de résoudre les problèmes de l'art antérieur en proposant notamment un montage d'une butée d'embrayage sur un arbre d'une boîte de vitesses d'un véhicule automobile dans lequel la fonction d'autocentrage de la butée peut être réalisée de façon satisfaisante en relation avec un support permettant d'améliorer la compacité dudit montage.

A cet effet, l'invention propose un montage d'une butée d'embrayage sur un arbre d'une boîte de vitesses d'un véhicule automobile, ladite butée comprenant une bague tournante et une bague fixe pourvues chacune d'une piste de roulement formant entre elles un chemin de roulement dans lequel des corps roulants sont disposés pour guider la rotation relative desdites bagues, ladite bague tournante étant solidaire d'une portée d'actionnement du diaphragme de l'embrayage par appui sensiblement axial de ladite portée sur ledit diaphragme, ledit montage comprenant en outre un support annulaire d'association de la butée sur l'arbre qui comprend une portée d'appui sur laquelle une portée de montage solidaire de la bague fixe est disposée, une rondelle élastique d'autocentrage de la butée sur l'arbre étant disposée pour exercer un effort axial sur la portée de montage contre la portée d'appui, ladite rondelle présentant une extrémité arrière en appui sur la portée de montage et une extrémité avant disposée en appui sur un bourrelet formé sur une portée axiale du support, le support présentant en outre une portée avant qui est reliée à la portée axiale en s'étendant intérieurement, l'extrémité avant de la rondelle étant agencée pour pouvoir se déformer élastiquement dans une configuration de montage dans laquelle son diamètre intérieur est au moins égal au diamètre extérieur du bourrelet.

D'autres objets et avantages de l'invention apparaîtront dans la description qui suit, faite en référence aux figures jointes, dans lesquelles :
- la figure 1 est une vue partielle en coupe longitudinale d'un montage selon un mode de réalisation de l'invention ;
- la figure 2 est une vue en perspective de la rondelle d'autocentrage du montage de la figure 1 ;
- la figure 3 est une vue agrandie en coupe montrant l'extrémité avant de la rondelle d'autocentrage de la figure 2.

On décrit ci-dessous un mode de réalisation d'un montage d'une butée d'embrayage sur un arbre (non représenté) d'une boîte de vitesses d'un véhicule automobile, ledit arbre étant par exemple déplaçable en translation par l'intermédiaire d'un piston du système d'actionnement de l'embrayage. En particulier, l'arbre peut faire partie du piston ou être disposé en bout dudit piston, le système d'actionnement pouvant être de type à commande hydraulique. Dans un exemple d'application, le montage est destiné à un double embrayage.

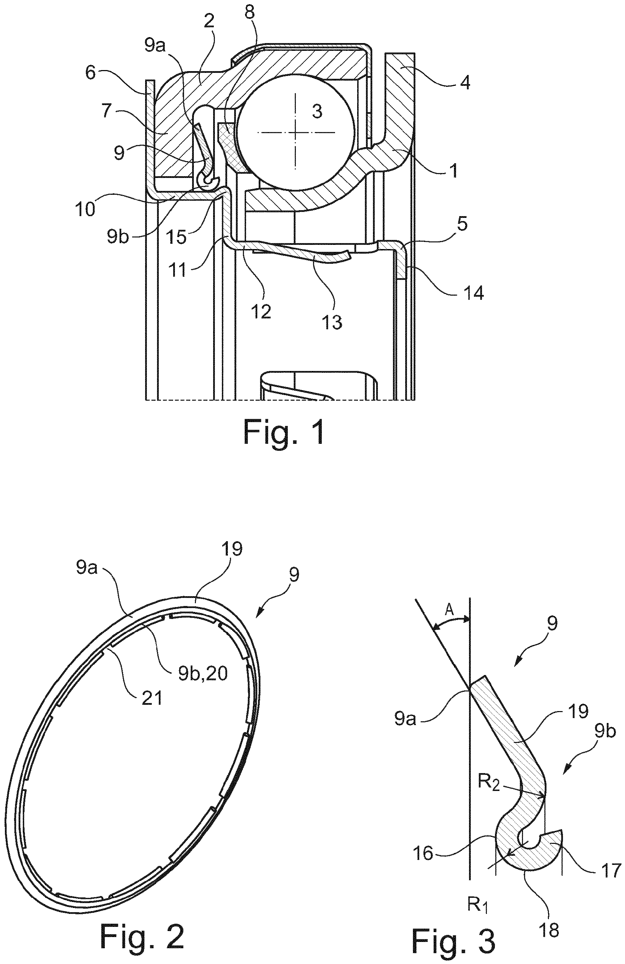

La butée comprend une bague tournante 1 et une bague fixe 2 pourvues chacune d'une piste de roulement formant entre elles un chemin de roulement dans lequel des corps roulants 3 sont disposés pour guider la rotation relative desdites bagues. En outre, la bague tournante 1 est solidaire d'une portée d'actionnement 4 du diaphragme de l'embrayage par appui sensiblement axial de ladite portée sur ledit diaphragme. Sur la figure 1, un seul côté du montage est représenté, l'autre côté étant symétrique par rapport à son axe de révolution.

Le montage comprend en outre un support annulaire 5 d'association de la butée sur l'arbre qui comprend une portée d'appui 6 sur laquelle une portée de montage 7 solidaire de la bague fixe 2 est disposée. Ainsi, la translation réversible de l'arbre permet l'actionnement du diaphragme par l'intermédiaire de la butée, entre une position d'embrayage dans laquelle la portée d'actionnement 4 est précontrainte contre le diaphragme et une position de débrayage dans laquelle ladite portée appuie sur ledit diaphragme.

Dans le mode de réalisation représenté, les bagues 1, 2 sont réalisées en tôles embouties, la bague extérieure 2 étant fixe et la bague intérieure 1 étant tournante. En outre, des billes 3 maintenues par une cage 8 sont disposées dans un chemin de roulement à contact oblique dans le sens d'application de l'effort de déplacement de la butée en position de débrayage.

Dans la description, les termes « extérieur » et « intérieur » sont définis en référence à l'axe de rotation de la butée, à savoir « intérieur » pour une disposition proche de cet axe et « extérieur » pour une disposition éloignée. Par ailleurs, les termes « avant » et arrière » sont définis par rapport au sens de déplacement de la butée, à savoir à droite de la figure 1 pour « avant » et à gauche pour « arrière ».

Dans le mode de réalisation représenté, la portée d'actionnement 4 est formée par une extension radiale de la bague tournante 1 qui s'étend extérieurement. La bague fixe 2 comprend une extension radiale qui s'étend intérieurement pour former la portée de montage 7, la surface arrière de ladite portée de montage étant en appui sur la surface avant de la portée d'appui 6 qui s'étend radialement vers l'extérieur.

Toutefois, le montage selon l'invention n'est pas limité à une telle réalisation, en particulier un montage prévoyant une bague extérieure tournante et une bague intérieure fixe est également envisageable, ainsi qu'une portée de montage et/ou d'actionnement rapportée sur la bague correspondante.

Pour compenser les défauts de concentricité entre le diaphragme et l'arbre, le montage comprend en outre une rondelle élastique 9 d'autocentrage de la butée sur l'arbre. La rondelle 9 est disposée pour exercer un effort axial sur la portée de montage 7 contre la portée d'appui 6, ledit effort étant adapté pour permettre un déplacement radial de la butée relativement au support 5. En particulier, la rondelle 9 peut être réalisée dans un matériau présentant une limite élastique au moins égale à 1000 MPa à 20°C, par exemple en acier de type XC75 trempé ou encore en Inox.

Le support d'association 5 présente, d'arrière en avant, la portée d'appui 6, une portée axiale 10 dont le bord arrière est relié au bord intérieur de ladite portée d'appui, une portée avant 11 qui est reliée à l'avant de ladite portée axiale en s'étendant intérieurement et une portée axiale intérieure 12 qui est reliée au bord intérieur de ladite portée avant.

En particulier, l'extrémité de l'arbre peut être disposée dans la portée axiale intérieure 12 qui est pourvue de griffes 13 et d'une collerette intérieure avant 14 pour assurer sa retenue. Par ailleurs, l'extrémité de l'arbre est alors disposée à l'intérieur de la butée, ce qui améliore la compacité du montage.

Dans le mode de réalisation représenté, la portée avant 11 s'étend radialement et son bord extérieur est relié au bord avant de la portée axiale 10 par l'intermédiaire d'un congé de raccordement qui présente un pli formant un bourrelet 15. En particulier, le bourrelet 15 présente une forme extérieure arrondie délimitant un diamètre extérieur qui est supérieur au diamètre extérieur de la portée axiale 10.

La rondelle 9 d'autocentrage présente une extrémité arrière 9a en appui sur la portée de montage 7 et une extrémité avant 9b disposée en appui sur le bourrelet 15 de sorte à être en butée axiale. Dans le mode de réalisation représenté, l'extrémité arrière 9a de la rondelle 9 d'autocentrage est en appui sur la surface avant de la portée de montage 7, un jeu radial étant formé entre les portées 7, 10 afin de permettre l'autocentrage de la butée par débattement radial de ladite butée relativement au support 5.

Pour permettre le montage de la rondelle 9 autour de la portée axiale 10, l'extrémité avant 9b de la rondelle 9 est agencée pour pouvoir se déformer élastiquement dans une configuration de montage dans laquelle son diamètre intérieur est au moins égal au diamètre extérieur du bourrelet 15. En particulier, l'extrémité avant 9b de la rondelle 9 peut présenter une zone arrière 16 qui est agencée pour induire la déformation par interférence de ladite zone sur le bourrelet 15 lors du montage de la rondelle 9.

Ainsi, lors du coulissement de la rondelle 9 sur le bourrelet 15, l'interférence permet le passage de l'extrémité avant 9b au dessus dudit bourrelet, puis ladite extrémité reprend sa forme initiale sur la portée axiale 10 pour venir en appui sur l'arrière dudit bourrelet. Pour ce faire, l'extrémité avant 9b de la rondelle 9 peut présenter une zone avant 17 qui est en appui sur le bourrelet 15, ladite zone étant conformée pour fiabiliser la retenue axiale. En outre, l'extrémité avant 9b de la rondelle 9 peut présenter une zone intérieure 18 qui est en appui sur la portée axiale 10, ladite zone ayant un diamètre intérieur qui est au plus égal au diamètre extérieur de ladite portée axiale.

Dans le mode de réalisation représenté, l'extrémité avant 9b de la rondelle 9 présente un repli extérieur avant 17 qui est en appui sur le bourrelet 15, ledit repli étant relié à la rondelle 9 par un congé arrière arrondi. Plus précisément, l'extrémité avant 9b présente une section en S, le bord avant 17 dudit S s'étendant extérieurement pour être en appui sur le bourrelet 15 et la zone intérieure 18 dudit S étant en appui sur la portée axiale 10.

Cette réalisation permet de combiner une bonne souplesse de l'extrémité avant 9b afin de limiter la force nécessaire au montage de la rondelle 9 avec un effort de retenue important, notamment bien supérieur à l'effort d'autocentrage attendu, de sorte à garantir la fonction d'autocentrage. En particulier, le bord avant 17 du S s'étend sensiblement radialement en délimitant un diamètre qui est supérieur au diamètre extérieur du bourrelet 15 de sorte à empêcher le démontage de la rondelle 9.

Pour conférer l'effort d'autocentrage attendu, la rondelle 9 est disposée entre la portée de montage 7 et le bourrelet 15 en étant inclinée vers l'arrière. Sur la figure 1, la rondelle est inclinée d'un angle A compris entre 20 et 40°, notamment de 30°, par rapport à la direction radiale. Cette inclinaison combinée avec l'appui de la rondelle 9 sur la portée axiale 10 par l'intermédiaire de la zone intérieure arrondie 18 du S permet le basculement de ladite rondelle sur une course de compression qui est utile pour la fonction d'autocentrage, et ce sans risquer la perte d'appui de ladite rondelle sur le bourrelet 15.

De façon avantageuse, les deux rayons formant les bords du S sont différents, le rayon intérieur R₁ étant inférieur au rayon extérieur R₂. Par exemple, pour une différence de diamètre comprise entre 0,2 et 0,4 mm entre la portée axiale 10 et le bourrelet 15, un rayon intérieur R₁ inférieur à 1 mm permet d'obtenir la déformation en configuration de montage et de garantir la fonction d'autocentrage.

Pour augmenter sa souplesse, on peut prévoir que l'extrémité avant 9b de la rondelle 9 soit discontinue angulairement. Sur les figures, la rondelle 9 comprend une couronne annulaire 19 présentant un bord extérieur formant extrémité arrière 9a et un bord intérieur sur lequel s'étend vers l'avant une pluralité de ponts 20 de section en S, lesdits ponts étant séparés angulairement par des encoches 21. En variante non représentée, le bord extérieur 9a peut également être discontinu angulairement.

## Revendications

1. Montage d'une butée d'embrayage sur un arbre d'une boîte de vitesses d'un véhicule automobile, ladite butée comprenant une bague tournante (1) et une bague fixe (2) pourvues chacune d'une piste de roulement formant entre elles un chemin de roulement dans lequel des corps roulants (3) sont disposés pour guider la rotation relative desdites bagues, ladite bague tournante étant solidaire d'une portée d'actionnement (4) du diaphragme de l'embrayage par appui sensiblement axial de ladite portée sur ledit diaphragme, ledit montage comprenant en outre un support annulaire (5) d'association de la butée sur l'arbre qui comprend une portée d'appui (6) sur laquelle une portée de montage (7) solidaire de la bague fixe (2) est disposée, une rondelle élastique (9) d'autocentrage de la butée sur l'arbre étant disposée pour exercer un effort axial sur la portée de montage (7) contre la portée d'appui (6), ladite rondelle présentant une extrémité arrière (9a) en appui sur la portée de montage (7) et une extrémité avant (9b) disposée en appui sur un bourrelet (15) formé sur une portée axiale (10) du support (5), ledit montage étant **caractérisé en ce que** le support (5) présente en outre une portée avant (11) qui est reliée à la portée axiale (10) en s'étendant intérieurement, et **en ce que** l'extrémité avant (9b) de la rondelle (9) est agencée pour pouvoir se déformer élastiquement dans une configuration de montage dans laquelle son diamètre intérieur est au moins égal au diamètre extérieur du bourrelet (15).

2. Montage selon la revendication 1, **caractérisé en ce que** l'extrémité avant (9b) de la rondelle (9) présente une zone arrière (16) qui est agencée pour induire la déformation par interférence de ladite zone sur le bourrelet (15) lors du montage de la rondelle (9).

3. Montage selon la revendication 1 ou 2, **caractérisé en ce que** l'extrémité avant (9b) de la rondelle (9) présente une zone intérieure (18) qui est en appui sur la portée axiale (10).

4. Montage selon l'une quelconque des revendications 1 à 3, **caractérisé en ce que** l'extrémité avant (9b) de la rondelle (9) présente une zone avant (17) qui est en appui sur le bourrelet (15).

5. Montage selon la revendication 4, **caractérisé en ce que** l'extrémité avant (9b) de la rondelle (9) présente un repli extérieur avant (17) qui est en appui sur le bourrelet (15), ledit repli étant relié à la rondelle (9) par un congé arrière arrondi.

6. Montage selon la revendication 5, **caractérisé en ce que** l'extrémité avant (9b) de la rondelle (9) présente une section en S, le bord avant (17) dudit S s'étendant extérieurement pour être en appui sur le bourrelet (15).

7. Montage selon l'une quelconque des revendications 1 à 6, **caractérisé en ce que** l'extrémité avant (9b) de la rondelle (9) est discontinue angulairement.

8. Montage selon l'une quelconque des revendications 1 à 7, **caractérisé en ce que** la rondelle (9) est disposée entre la portée de montage (7) et le bourrelet (15) en étant inclinée vers l'arrière.

9. Montage selon l'une quelconque des revendications 1 à 8, **caractérisé en ce que** le support (5) présente en outre une portée axiale intérieure (12) qui est reliée au bord intérieur de la portée avant (11).

10. Montage selon l'une quelconque des revendications 1 à 9, **caractérisé en ce que** le bourrelet (15) est formé par un pli du congé de raccordement entre le bord avant de la portée axiale (10) et le bord extérieur de la portée avant (11).

11. Montage selon l'une quelconque des revendications 1 à 10, **caractérisé en ce que** la bague extérieure (2) est fixe.

12. Montage selon l'une quelconque des revendications 1 à 11, **caractérisé en ce que** la portée d'actionnement (4) est formée par une extension radiale de la bague tournante (1).

13. Montage selon l'une quelconque des revendications 1 à 12, **caractérisé en ce que** la bague fixe (2) comprend une extension radiale qui s'étend intérieurement pour former la portée de montage (7), la surface arrière de ladite portée de montage étant en appui sur la portée d'appui (6) et l'extrémité arrière (9a) de la rondelle (9) étant en appui sur la surface avant de la portée de montage (7).
